(19) Europäisches Patentamt
European Patent Office
Office européen des brevets

(11) **EP 2 879 280 A1**

(12) **EUROPEAN PATENT APPLICATION**

(43) Date of publication:
03.06.2015 Bulletin 2015/23

(51) Int Cl.:
*H02K 19/12* (2006.01)    *H02K 19/26* (2006.01)
*H02K 19/32* (2006.01)    *H02K 99/00* (2014.01)

(21) Application number: 13194936.4

(22) Date of filing: 28.11.2013

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **NRG Tech Ltd.**
**1527 Sofia (BG)**

(72) Inventor: **Petkanchin, Lachezar Lazarov**
**1527 Sofia (BG)**

(74) Representative: **Müller Schupfner & Partner Patent- und Rechtsanwaltspartnerschaft mbB Bavariaring 11 80336 München (DE)**

Remarks:
Amended claims in accordance with Rule 137(2) EPC.

(54) **Electric machine**

(57)    Electric machine, comprising a stator and a rotor, wherein the stator comprises at least one stator-pole-pair, and wherein the rotor comprises at least one rotor-pole-pair, wherein each pole-pair is formed by at least three coils, wherein the stator comprises stator-coils, and wherein the rotor comprises rotor-coils, wherein the stator comprises a stator-switching-device, wherein the rotor comprises a rotor-switching-device, wherein the stator-switching-device is adapted to electrically connect stator-coils, and wherein the rotor-switching-device is adapted to electrically connect rotor-coils.

**Fig. 1**

**Description**

This invention relates to an electric machine or generator or motor and to methods to operate an electric machine or generator or motor or AC generator.

In the prior art different types of electric machines (motors and generators) with wound or cage rotors are known. Such electric machines are divided into two major groups: synchronous machines and induction machines. Induction machines are quite flexible in terms of rotation speed and torque. In this context it is also known to vary the stator pole pitch and thus to further increase the flexibility of such induction machines. However, the main disadvantage of induction machines is the relatively low efficiency compared to synchronous electric machines. Al-though synchronous machines are more efficient, the efficiency is limited to only one rotation speed: the synchronous speed of the rotor with the AC frequency supplied to the machine. Thus, synchronous machines are not flexible enough.

Therefore, it is an object of the current invention to provide an electric machine and methods to operate an electric machine with high efficiency at different rotation speeds.

This object is achieved by means of an electric machine according to claim 1 and methods to operate an electric machine according to claims 13, 14 and 15. Additional advantages and features of preferred embodiments of the current invention are defined in the dependent claims.

According to the invention, there is provided an electric machine, comprising a stator and a rotor, wherein the stator comprises at least one stator-pole-pair, and wherein the rotor comprises at least one rotor-pole-pair, wherein each pole-pair is formed by at least three coils, wherein the stator comprises stator-coils, and wherein the rotor comprises rotor-coils, wherein the stator comprises a stator-switching-device, and wherein the rotor comprises a rotor-switching-device, wherein the stator-switching-device is adapted to electrically connect stator-coils, and wherein the rotor-switching-device is adapted to electrically connect rotor-coils. In addition, the rotor-switching-device is adapted to provide the rotor with DC and/or AC. In the same manner, the stator-switching-device is adapted to provide the stator with DC and/or AC. As a consequence, the rotor as well as the stator can generate rotating magnetic fields (using e.g. three-phase AC). Preferably, the stator-switching-device is adapted to vary a number of stator-pole-pairs by electrically connecting appropriate stator-coils, wherein the rotor-switching-device is adapted to vary a number of rotor-pole-pairs by electrically connecting appropriate rotor-coils. In particular, the electric machine can be a synchronous machine. In this case, the stator-coils are provided with AC and the rotor-coils are provided with DC. The synchronous machine is an AC rotating machine whose speed under steady state condition is proportional to the frequency of the current in its armature, respectively, in its rotor. This is also named the "synchronous speed". The synchronous speed N is given by

$$N = f / p \cdot 60 \text{ s/min}$$

where,

f is the frequency of the AC supply current (power frequency) in Hz, and
p is the is the number of pole pairs.

Each pole pair comprises two poles, a north- and a south-pole. Thus, the smallest pole pair number is "1" (e. g. 1 north pole and 1 south pole). Preferably, the number of stator-pole-pairs is the same as the number of rotor-pole-pairs. They correspond to each other. In other words, by varying the number of stator-pole-pairs, respectively, the number of rotor-pole-pairs, the number of magnetic poles and in consequence the synchronous speed N is changeable. Advantageously, the electric machine is adapted to change the pole number, respectively, the pole angular pitch while working (the pole pitch is defined as a peripheral distance between centres of two adjacent poles and the pole angular pitch is defined as the angle formed by the centres of two adjacent poles to the rotor's rotation axis). Thus, the electric machine can be operated at highest efficiency at different rotation speeds and a given power frequency. The electric machine can be operated as AC motor and as AC generator at a variety of output frequencies at a given rotation speed. The rotor is adapted to create a variable magnetic field which can vary on command in terms of direction and magnitude, relative to the rotor itself. The rotor comprises a rotation axis and is supported inside the stator. Both, the stator and the rotor, extend along the rotation axis. The stator of the electric machine consists preferably of a laminated electrical steel core that comprises the stator-coils. The stator-switching-device preferably connects the stator-coil with a polyphase system. Polyphase systems have three or more energized electrical conductors carrying alternating currents with a definite time offset between the voltage waves in each conductor. With polyphase power a rotating magnetic field can be generated. Preferably, always three coils are connected to form a three-phase winding, respectively, system. Advantageously, this connection is not fixed. The connection is provided by the stator-switching-device and so different coils and also a different number of coils can be connected to each and every AC phase to vary the number of poles, respectively, pole pairs of the stator and in consequence, the synchronous rotation speed of the electric machine. The same is valid for the rotor-switching-device and the rotor-coils. To further improve rotor rotation speed flexibility, the rotor-coils are preferably provided with AC by the rotor-switching-device. This means that both, the stator and the rotor, generate a rotating magnetic field using AC current. Preferably, the rotating magnetic fields of the stator and the rotor rotate in different directions.

Preferably, the stator comprises a plurality of stator-slots and the rotor comprises a plurality of rotor-slots, wherein each stator-coil is arranged in at least two statorslots, and wherein each rotor-coil is arranged in at least two rotor-slots. This means that each coil is preferably arranged in two slots. This configuration makes it possible to electrically connect the appropriate stator-coils, respectively, rotor-coils and, in a consequence, to vary the pole numbers, respectively, the pole pair numbers of the rotor and the stator. As already mentioned, the pole pair number of the rotor is preferably the same as the pole pair number of the rotor. In a preferred embodiment the stator-coils are designed in the same way as the rotor-coils. Each coil is preferably arranged in two neighbouring slots and the coils angular pitch does not vary from coil to coil. Preferably, the rotor-coils as well as the stator-coils extend substantially parallel to the rotation axis. However, it is also possible that the rotor-coils and/or the stator-coils extend at least partly transverse or oblique to the rotation axis. In addition, the rotor-coils and/or the stator-coils can have at least partly a corrugated form along the rotation axis.

In a preferred embodiment, a number of stator-slots and a number of rotor-slots is twelve, wherein a number of stator-coils and a number of rotors-coils is twelve. Thus, the coil angular pitch in the stator and in the rotor is preferably 30°. The twelve stator-coils are located in the preferred embodiment in 12 stator-slots in two layers. Preferably, the rotor structure corresponds to the stator structure. Of course, coils can comprise a plurality of windings. It shall be understood that embodiments with different numbers of coils, e. g. 18, 24, or 48 are also possible and preferred.

Expediently, the electric machine, in particular the rotor, can be operated with DC and/or AC, wherein AC comprises at least 3 phases. In other words, a minimal number of phases is preferably 3 (phase A, phase B and phase C). It goes without saying that also polyphase systems with more phases are possible, e. g. preferably with 6 phases.

In particular, the electric machine can be operated as synchronous machine and as induction machine. In induction operation mode the rotor switching device switches rotor coils in short and not to any of the AC phases. The rotating magnetic field created by the stator will induce electric currents in the rotor coils which is the principle behind induction motors.

Advantageously, the electric machine can be switched from an induction operation mode to a synchronous operation mode and vice versa. Preferably, the motor can be started as induction machine, by short-circuiting the rotor coils and after the electric machine has, for example, a certain rotation speed the rotor coils can be provided with DC and as a consequence, the electric machine is operated as synchronous machine. It goes without saying that the electric machine can be also operated as induction machine after being started as synchronous machine. Expediently, the electric machine can be operated as motor as well as generator. In the case of generator operation mode the AC frequency is the parameter to be solved and rotation speed is a given parameter.

In a preferred manner, the stator-switching-device is adapted to provide the stator with AC, and the rotor-switching-device is adapted to provide the rotor with DC. Advantageously, the stator-coils are divided in 4 groups of three coils each. The pole pair number (of the stator) is 4 in this case. Each group is connected by the stator-switching-device in star configuration. Three-phase AC is applied to the 4 stator star configurations. In the same manner, the rotor-coils are preferably divided in 4 groups of 3 coils each. Thus, the pole pair number (of the rotor) is also 4. However, the rotor is supplied with DC. Electric connections are made by the rotor-switching-device. Both switching-devices are operated by appropriate controllers. The operation mode is named "single magnetic field rotation". In case of a "single magnetic field rotation" all groups of rotor-coils are supplied with different DC voltages to generate proportionate excitement current in the rotor-coils. The purpose is to generate a proper rotor magnetic field, which is static, relative to the rotor and having the same number of poles as the stator rotating magnetic field. A preferred method to estimate these voltages is this:

"V" and "-V" are voltages from DC power source. Exact values of "V" and "-V" mainly depend on rotor coils internal resistance.
C is the number of rotor AC phases.
V1 is the DC-value supplied to the first rotor-coil, V2 is the DC-value supplied to second rotor-coil ...VC is the DC-value supplied to the Cth rotor-coil:

$$V1 = \sin(30°)V$$

$$V2 = \sin(30°+360°/C)V$$
$$V3 = \sin(30°+360°2/C)V$$
$$(...)$$
$$VC = \sin[30°+360°(C-1)/C]V$$

For three-phase AC, 12 rotor coils, 12 stator-coils and 8 poles C = 3, therefore:

$$V1 = \sin(30°)V = 1/2V$$

$$V2 = \sin(30° + 360°/3)V = 1/2V$$

$$V3 = \sin(30° + 720°/3)V = -V$$

For 6-phase AC, 12 rotor coils, 12 stator-coils and 4 poles C = 6, therefore:

$$V1 = \sin(30°)V = 1/2V$$

$$V2 = \sin(30° + 60°)V = V$$

$$V3 = \sin(30° + 120°)V = 1/2V$$

$$V4 = \sin(30° + 180°)V = -1/2V$$

$$V5 = \sin(30° + 210°)V = -V$$

$$V6 = \sin(30° + 300°)V = -1/2V$$

Also preferably, the stator-switching-device is adapted to provide the stator with AC, and the rotor-switching-device is adapted to provide the rotor with AC. In this case, the groups of rotor-coils in the rotor are also supplied with three-phase AC. The purpose of that is to generate a proper rotor rotating field, which rotates relative to the rotor itself, having the same number of poles as the stator rotating magnetic field. Expediently, it is possible to adapt or control the rotation direction of the magnetic field of the rotor by switching or changing the order of the phases the rotor is supplied with. The resulting rotating magnetic field of the rotor can for example rotate in opposite direction, compared to the rotating field created by the stator. This operation mode is named "double magnetic field rotation". In case of "double magnetic field rotation" the phases are fed to the rotor-coils in reverse order, thus generating a reverse rotation direction of the rotor magnetic field compared to the stator rotating field. The two rotating magnetic fields will tend to attract their opposite poles, which will be only possible when the rotor rotates at an angular speed which is a result of subtraction of the angular speed of rotor rotating field from the angular speed of the stator rotating field. This also means that if the rotor rotating field direction is opposite to the direction of the stator rotating field then the rotor will rotate at an angular speed which is actually the sum of angular speeds of the rotor and stator rotating fields. In a more private case when both rotor and stator are supplied with the same AC and rotor rotating field has the same angular speed as stator rotating field, but opposite in direction, then the rotor will rotate at double the angular speed of stator rotating field.

Preferably, the stator-switching-device and the rotor-switching-device are adapted to vary the number of the phases. In other words, the number of phases can be varied in, respectively, during operation of the electric machine.

Expediently, the rotor-switching-device comprises an (electrical) rotor-supply that is adapted to provide an electric connection to an external AC or DC power source. As already mentioned, the rotor of the electric machine can also be provided with AC, contrary to synchronous machines known from the prior art. That means that rotating magnetic fields can be generated by the stator and the rotor. In this case the rotation speed can be doubled. This operation mode is named the "double magnetic field rotation".

Preferably, the (electrical) rotor-supply comprises rotor brushes and/or a flexible wire connection and/or means for electric induction inside the rotor from an external magnetic field.

Expediently, the stator-switching-device comprises an electrical stator-supply that is adapted to provide a connection with an external AC power source. Preferably, the power source, to which the stator-supply is connected, is the same as the power source, to which the rotor-supply is connected. However, this is not mandatory.

Expediently, the stator-switching-device is adapted to connect at least three stator-coils in star configuration, wherein the rotor-switching-device is adapted to connect at least three rotor-coils in star configuration. Of, course both switching-devices can be also adapted to provide delta configurations.

Preferably, the stator-switching-device is controlled by a stator-control-unit, wherein the rotor-switching-device is controlled by a rotor-control-unit, wherein the stator-control-unit and the rotor-control-unit are connected by a communication connection. The communication connection is adapted to synchronize the pole number, in other words, the pole pair number of the stator and the pole pair number of the rotor. The communication connection can be a cable or a wire or alternative means. However, the communication connection can also be wireless.

Advantageously, the stator-switching-device and/or the rotor-switching-device are adapted to supply the stator-coils, respectively, the rotor-coils with a predefined voltage or current. Both controllers are adapted to apply predefined voltages or currents in exact predefined moments of time to an appropriate coil (stator-coil and/or rotor-coil). In addition, both controllers are adapted to draw predefined amounts of current from a coil or a group of coils in exact predefined moments of time. This can be based on an algorithm taking into account other (momentary) parameters like the momentary angular position of the rotor, AC frequency supplied, output torque needed, rotation speed needed, power output needed and other.

According to the invention, a method to operate an electric machine, wherein the electric machine comprises a stator with a plurality of stator-coils and a rotor with a plurality of rotor-coils, wherein the stator comprises a stator-switching-device and wherein the rotor comprises a rotor-switching-device, comprises the step:

- changing a rotor speed of the electric machine by changing a pole number of the electric machine using a rotor-switching-device and/or the stator-switching-device.

Changing the pole number of the electric machine means that a rotor pole pair number and a stator pole pair number are changed and preferably adapted. This means that the stator pole pair number is preferably the same as the rotor pole pair number. The physical background of this step is based on the synchronous (rotation) speed that depends on the pole pair number and the power frequency. By changing the pole pair number, the synchronous speed of the electric machine can be varied advantageously.

According to the invention, a method to operate an electric machine, wherein the electric machine comprises a stator with a plurality of stator-coils and a rotor with a plurality of rotor-coils, wherein the stator comprises a stator-switching-device and wherein the rotor comprises a rotor switching device, comprises the steps:

- providing the stator with AC using the stator-switching-device;
- providing the rotor with AC or DC using the rotor-switching-device.

Advantageously, the rotor and the stator can be supplied with AC. This enables an operator to realize a "double magnetic field rotation", as already explained. Expediently, the method comprises also the step of changing a number of phases, respectively, the step of changing a number of coils that are combined in one group. Of course, this means that the pole number is changed.

According to the invention, a method to operate an electric machine comprises the steps:

- changing a rotor speed of the electric machine by changing a pole number of the electric machine using a rotor switching-device and/or a stator-switching-device;
- providing the stator with AC using the stator-switching-device;
- providing the rotor with AC or DC or short-circuiting the rotor (60) using the rotor-switching-device.

Preferably, a method to operate an electric machine comprises the steps:

- operating the electric machine as induction motor supplying the stator with AC;
- short-circuiting the rotor coils by the rotor switching device.

In this case, the rotor coils are supplied neither with AC nor with DC.

The methods according to the invention can include the features and advantages of the electric machine according to the invention and vice versa.

Additional advantages and features of the current invention are shown in the following description of preferred embodiments of the current invention with reference to the attached drawings. Single features or characteristics of respective embodiments are explicitly allowed to be combined within the scope of the current invention.

Figure 1: shows schematically a preferred embodiment of an electric machine;

Figure 2a: shows schematically a preferred embodiment of a stator-coil scheme;

Figure 2b: shows schematically a preferred embodiment of a rotor-coil scheme;

Figure 3: shows schematically a preferred embodiment of a stator set up;

Figure 4: shows schematically a preferred stator-coil configuration;

Figure 5: shows schematically a preferred embodiment of a rotor set up;

Figure 6: shows schematically a preferred rotor-coil configuration;

Figure 7: shows schematically a preferred operation mode of an electric machine;

Figure 8: shows schematically a further preferred embodiment of a rotor set up;

Figure 9: shows schematically a further preferred rotor-coil configuration;

Figure 10: shows a further preferred operation mode of an electric machine with three-phase AC applied to the rotor-coils;

Figure 11: shows schematically a further preferred

Figure 12: shows schematically a further preferred stator-coil configuration;

Figure 13: shows schematically a further preferred embodiment of a rotor set up;

Figure 14: shows schematically a further preferred rotor-coil configuration;

Figure 15: shows a further preferred operation mode of an electric machine;

Figure 16: shows schematically a further preferred embodiment of a stator set up;

Figure 17: shows schematically a further preferred stator-coil configuration;

Figure 18: shows schematically a further preferred embodiment of a rotor set up;

Figure 19: shows schematically a further preferred rotor-coil configuration;

Figure 20: shows schematically a further preferred embodiment of a rotor set up;

Figure 21: shows schematically a further preferred rotor-coil configuration;

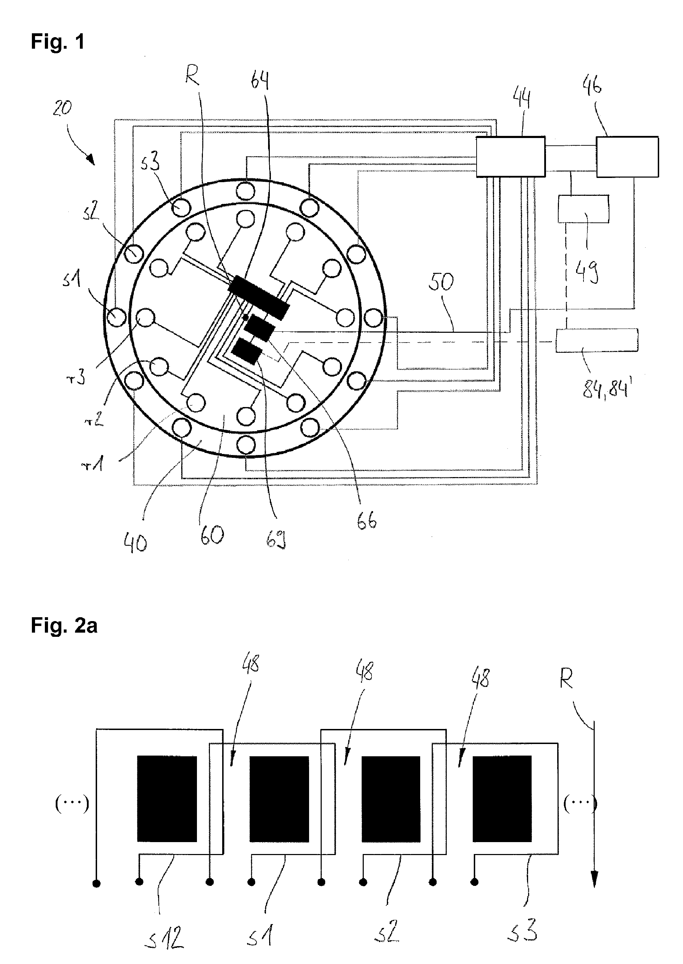

Referring now to **Fig. 1,** a preferred embodiment of an electric machine 20 is shown schematically. The electric machine 20 is orientated along a rotation axis R. The rotation axis R belongs to a rotor 60 that is positioned inside a stator 40. The stator 40 comprises 12 stator-coils s1, s2, s3 ... The rotor 60 comprises twelve rotor-coils r1, r2, r3 ... Inside the rotor 60, a rotor-switching-device 64 is arranged that is connected to a rotor-control-unit 66. The rotor-control-unit 66 is connected to a rotor-supply 69. Each of the rotor-coils r1, r2, r3 ... is connected to the rotor-switching-device 64. In the same manner, the stator 40 comprises a stator-switching-device 44 that is connected to a stator-control-unit 46, respectively, to a stator-supply 49. The stator-supply 49 as well as the rotor-supply 69 are connected to a power source 84; in the embodiment shown in Fig. 1 they are connected to the same power source, however this it not mandatory. The rotor-switching-device 64 and the stator-switching-device 44 are connected by a communication connection 50.

**Fig. 2a** shows schematically a preferred embodiment of a stator-coil scheme. Stator-slots 48 extend along a rotation axis R. Four stator-coils are shown: s1, s2, s3 and s12. According to Fig. 2a, each stator-coil is arranged in one stator-slot 48 and a neighbouring stator-slot 48. Thus, the stator-coils are preferably arranged in two layers per slot.

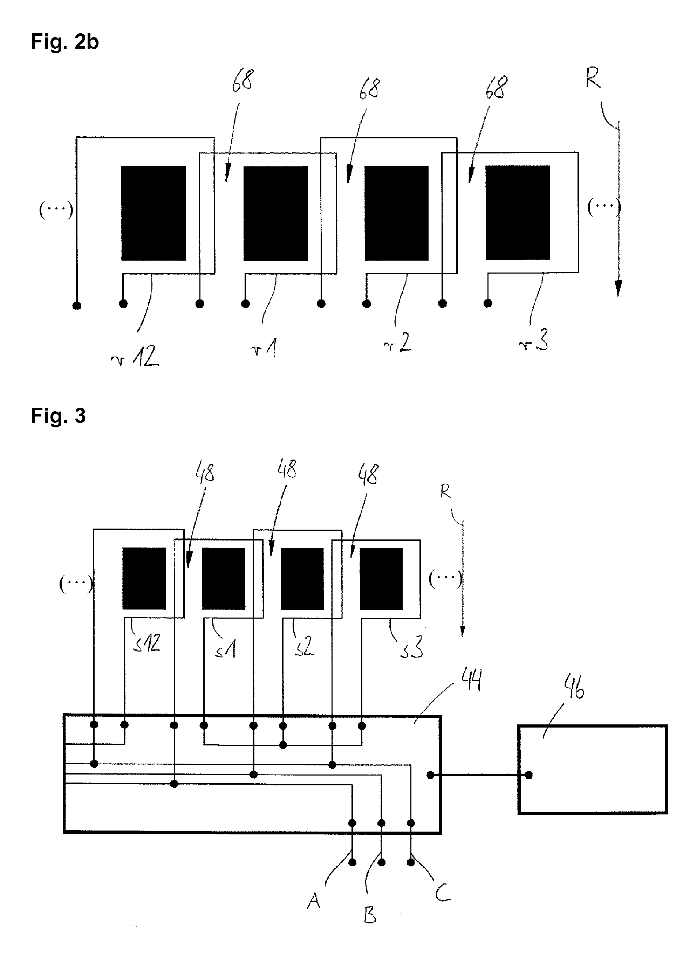

Similar to Fig. 2a, **Fig. 2b** shows schematically a preferred embodiment of a rotor-coil scheme. The arrangement of the rotor-coils r1, r2, r3 ... r12 is similar to the arrangement of the stator-coils shown in Fig. 2a. Four rotor-coils are shown: r1, r2, r3 and r12. According to Fig. 2b, each rotor-coil is arranged in one rotor-slot 68 and a neighbouring rotor-slot 68. The rotor-coils r1, r2, r3 ... are preferably arranged in two layers per slot.

**Fig. 3** shows schematically a preferred embodiment of a stator set up. Stator-coils s1, s2, s3 ... s12 are arranged in stator slots 48. The stator-coils s1, s2 and s3 are connected in star configuration. Stator-coil s1 is connected with a phase A of a three phase winding, stator-coil s2 with a phase B and stator-coil s3 with a phase C. Altogether, 12 stator-coils s1, s2, s3 ... are split in 4 groups wherein each group comprises 3 coils. The star configuration is provided by a stator-switching-device 44 that is connected to a stator-control-unit 46.

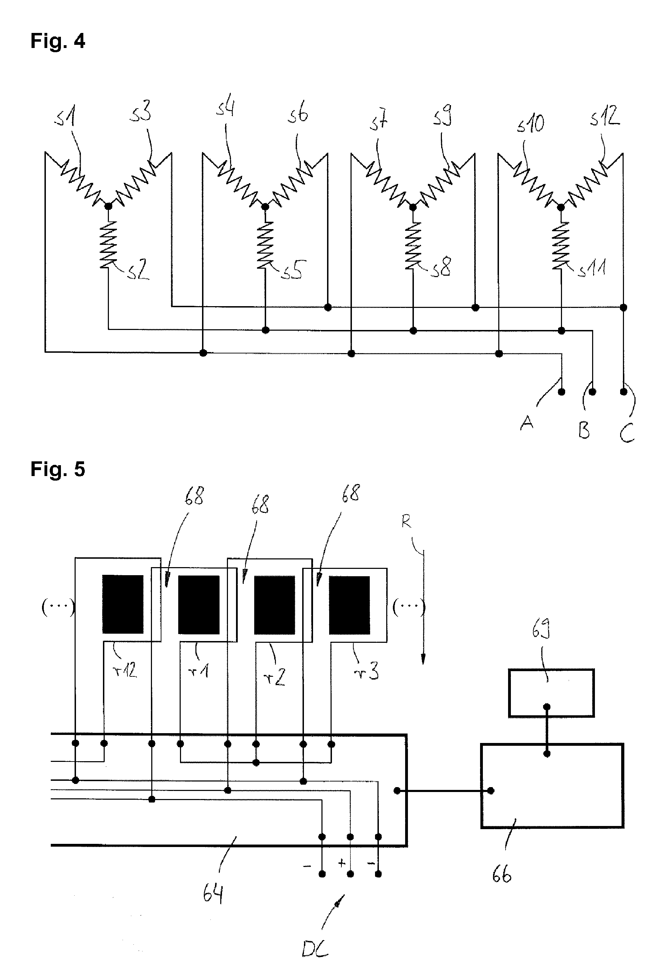

**Fig. 4** shows schematically a preferred stator-coil configuration of the preferred embodiment of a stator set up according to Fig. 3. Stator-coils s1, s2 and s3, which are connected to phases A, B and C, are connected in star configuration. The same applies to stator-coils s4, s5 and s6, respectively, to stator-coils s7, s8 and s9, respectively, to stator-coils s10, s11 and s12.

**Fig. 5** shows schematically a preferred embodiment of a rotor set up, wherein the rotor set up comprises a rotor-switching-device 64 that is connected to a rotor-control-unit 66 which is connected to a rotor-supply 69. Rotor-coils r1, r2, r3 ... r12 are provided with direct current (DC) by the rotor-switching-device 64. The rotor-coils r1, r2, r3 ... r12 are arranged in rotor slots 68. 12 rotor-coils r1, r2, r3 ... are split in 4 groups wherein each group comprises 3 coils.

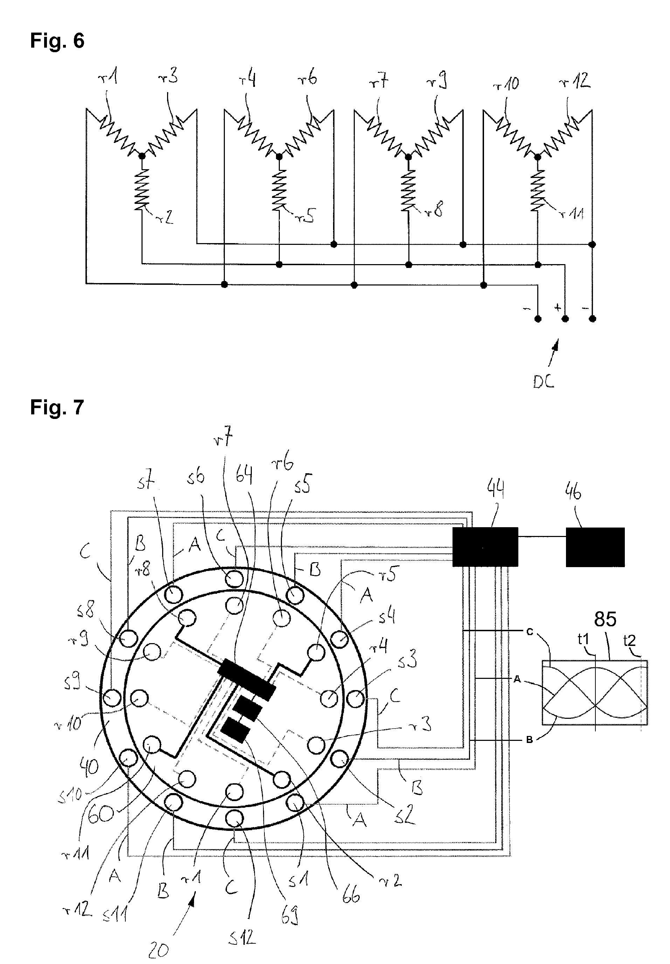

**Fig. 6** shows schematically a preferred rotor-coil configuration of the preferred embodiment of a rotor set up according to Fig. 5. Rotor-coils r1, r2 and r3, which are connected in star configuration, are provided with direct current (DC). The same applies to rotor-coils r4, r5 and r6, respectively to rotor-coils r7, r8 and r9, respectively, to rotor-coils r10, r11 and r12.

**Fig. 7** shows schematically a preferred operation mode of an electric machine 20, wherein a stator 40 and a rotor 60 are configured and designed according to Figs. 2-6. The stator 40 comprises stator-coils s1, s2 etc. and the rotor 60 comprises rotor-coils r1, r2 etc. Actually, the electric machine 20 comprises twelve rotor-coils r1, r2 ...r12 and 12 stator-coils s1, s2 ... The stator-coils s1, s2 ... are divided in four groups of three coils each. Each of the groups is connected by a stator-switching-device 44 in star configuration. The electric connections made by the stator-switching-device 44 are shown in Figs. 2a and 3. The rotor-coils r1, r2, r3 ... r12 are also divided in four groups of three coils each. They are electrically connected by a rotor-switching-device 64. The rotor-switching-device 64 is operated, respectively, controlled by a rotor-control-unit 66 and the stator-switching-device 44 is operated, respectively, controlled by a stator-control-unit 46. The rotor-coils r1, r2, r3 ... r12 are supplied with direct current (DC) as shown in Fig. 5. The configuration shown in Fig. 7 is adapted to provide a "single magnetic field rotation". If phase A is, for example, at a specific moment or time step t1 at its electrical current peak "I", the phases B and C are shifted by +120°, respectively, +240° degrees, cf. to chart 85. Phases B and C supply electrical current "-½ I" at this specific moment. Thus, the amount of current through the stator-coils s1, s4, s7 and s10 is twice as much as the amount of current through the other stator-coils s3, s5 ... Stator-coils s1, s4, s7 and s10 produce a magnetic field "Bs" and the other stator-coils s3, s5 ... produce a magnetic field "-½ Bs". Electrical connections, realized by the rotor switching device 64, as shown in Fig. 5 and Fig. 6 guarantee that the amount of current through the rotor-coils r2, r5, r8 and r11 is twice as much as the amount of current through the other rotor-coils and they produce a magnetic field "Br". All other rotor-coils will produce a magnetic field "-½Br". As a consequence, stator-coils s1, s4, s7 and s10 and rotor-coils r2, r5, r8 and r11 are attracted to each other by their corresponding magnetic north- and south-poles. After 1/6 (60°) of the AC period, the magnetic field of the stator 40 has rotated at 1/6 of the pole pitch, which is 15°. The rotor 60 follows the rotating field of the stator 40, thus turning 15°. After another 60°, phase B is at its maximum voltage (cf. to time step t2 in Fig. 7) and coils s2, s5, s8 and s11 induce the magnetic field "Bs". Still, the rotor-coils r2, r5, r8 and r11 are aligned to the (rotating) magnetic field "Bs". At this moment, 1/3 of the pole pitch is done and the process continues.

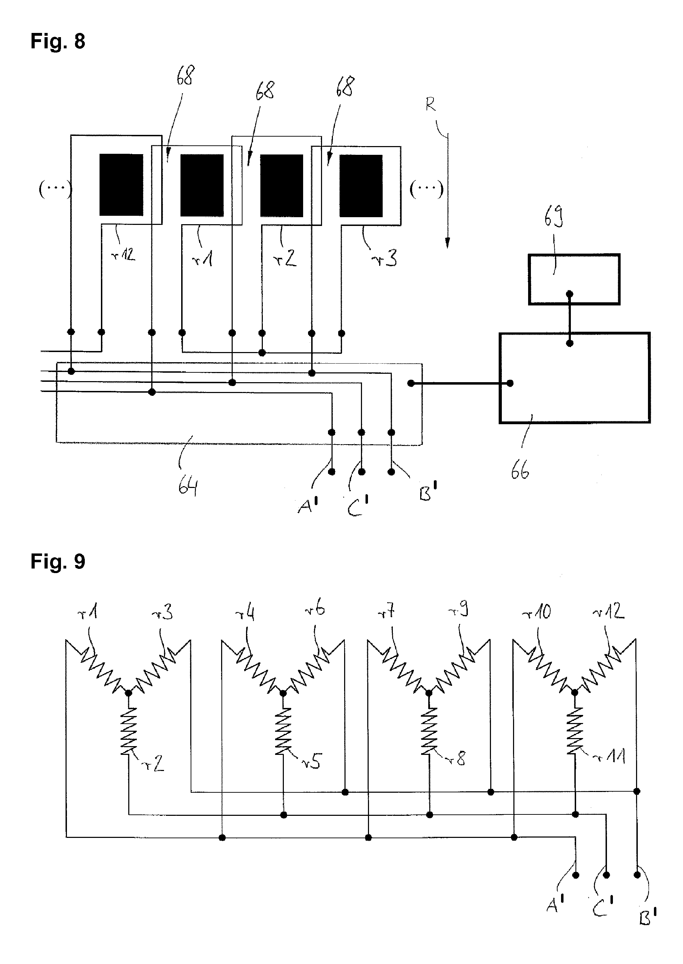

Referring now to **Fig. 8,** a further preferred embodiment of a rotor set up is shown. The configuration is similar to the embodiment according to Fig. 5. However, three-phase AC comprising the phases A', C' and B' is applied to the rotor-coils r1, r2, r3 ... r12. The rotor-coils r1, r2, r3...r12 are connected to a rotor-switching-device 64 that is connected to a rotor-control-unit 66. The rotor-control-unit 66 is connected to a rotor-supply 69.

**Fig. 9** shows schematically a preferred rotor-coil configuration of the preferred embodiment of a rotor set up according to Fig. 8. Rotor-coils r1, r2 and r3, which are connected in star configuration, are connected to phases A', C' and B' of a three-phase-system. The same applies to rotor-coils r4, r5 and r6, respectively, to rotor-coils r7, r8 and r9, respectively, to rotor-coils r10, r11 and r12.

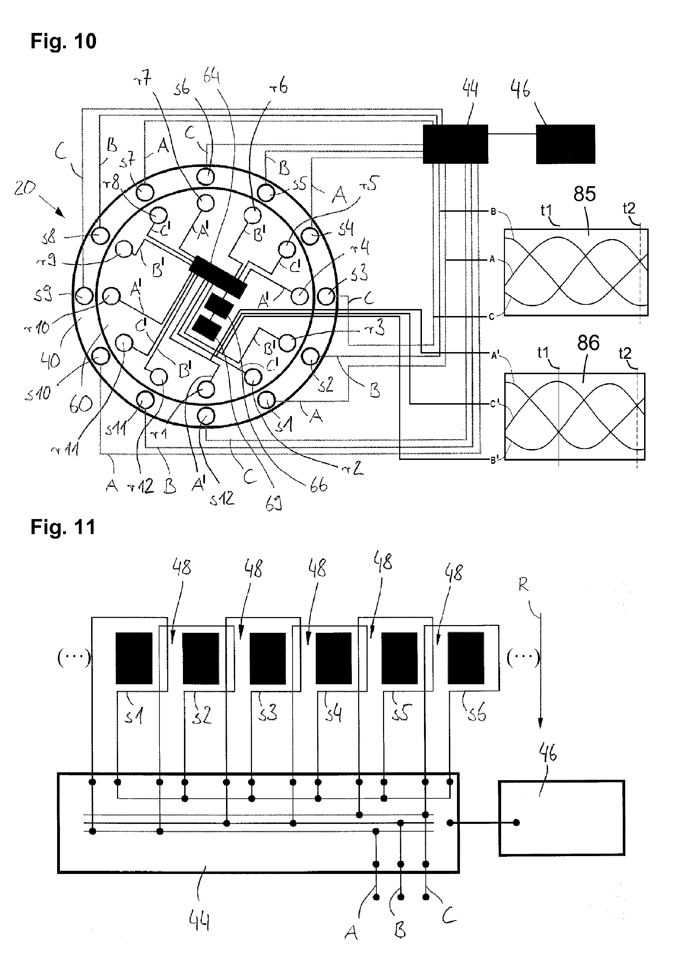

**Fig. 10** shows a further preferred operation mode of an electric machine 20 with three-phase AC applied to the rotor-coils r1, r2 ... according to Figs. 8-9. The remaining configuration corresponds to the configuration shown in Fig. 7. Two phases, namely phases C' and B', at the rotor-coils r2, r3, r5, r5, r8, r9, r11 and r12 are interchanged to reverse the rotation direction of the magnetic field of the rotor 60. The configuration, shown in Fig. 10, is adapted to provide a "double magnetic field rotation". If phase A of the stator 40 is, for example, at a specific moment or at time step t1 at its electrical current peak "I", phases B and C are shifted at +120° and +240° degrees. At this specific moment they supply electrical current "-½ I". Thus, the amount of current in stator-coils s1, s4, s7 and s10 is twice as much as the amount of current through the other stator-coils. Stator-coils s1, s4, s7 and s10 produce a magnetic field "Bs" and the other stator-coils produce a magnetic field "-½ Bs". As already mentioned, the rotor-coils r1, r2 ... are also supplied with three-phase AC, which can be a different source from the AC source supplied to the stator. Charts 85 and 86 depict electrical currents in AC phases supplied to the stator and to the rotor respectfully. If phase C' of the rotor 60 is at its electrical current peak, the amount of current in the rotor-coils r2, r5, r8 and r11 is twice as much as the amount of current in the other rotor-coils. The rotor-coils r2, r5, r8 and r11 produce a magnetic field "Br" and the other rotor-coils will produce a magnetic field "-½Br". As a consequence, the stator-coils s1, s4, s7, s10 and the rotor-coils r2, r5, r8 and r11 are attracted by their corresponding north- and south-poles. After 1/6 of the AC period (60°), the stator field would rotate at 1/6 of the pole pitch, which is 15°. The rotor field will also rotate at 15°, but in the opposite direction (as phases B' and C' are interchanged). At this moment (cf. to time step t2), phase A of the stator 40 will be at its minimum, like phase C' of the rotor 60. That is why now stator-coils s2, s5, s8 and rotor-coils r2, r5, r8 and r11 are attracted by their corresponding north- and south-poles. Now, the rotor 60 has turned 30°, which is twice a much as the rotation of the magnetic field of the stator 40.

**Fig. 11** shows schematically a further preferred embodiment of a stator set up. Stator-coils s1, s2, s3, s4, s5 and s6 are connected by a stator-switching-device 44 in star configuration. The stator-switching-device 44 is connected to a stator-control-unit 46 and provides three-phase AC comprising the phases A, B and C. The stator-coils s1, s2, s3 ... are located in stator slots 48.

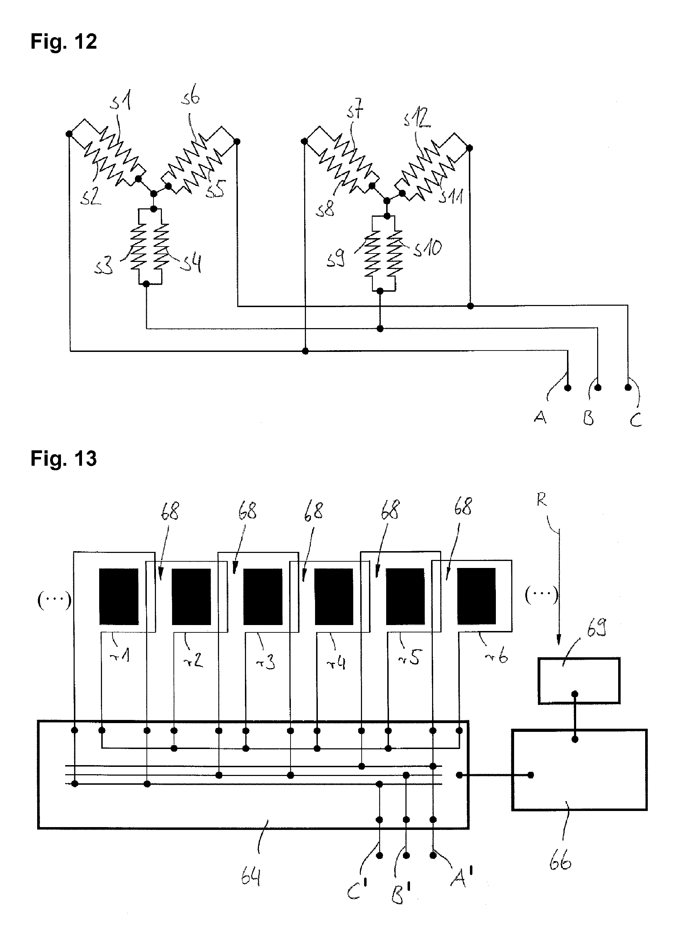

**Fig. 12** shows schematically a preferred stator-coil configuration of the preferred embodiment of a stator set up according to Fig. 11. Stator-coils s1 and s2 are connected to a phase A of a three-phase AC, stator-coils s3 and s4 are connected to a phase B and stator-coils s5 and s6 are connected to a phase C. In addition, stator-coils s1 and s2, respectively, s3 and s4, respectively, s5 and s6, which are all arranged in parallel, are connected in star configuration. The same applies to stator-coils s7, s8, s9, s10, s11 and s12.

**Fig. 13** shows schematically a further preferred embodiment of a rotor set up. Two rotor-coils are always arranged in parallel, for example r3 and r4 or r5 and r6. Similar to the embodiment shown in Fig. 11, the rotor-coils r1, r2, r3, r4, r5 and r6 are provided with alternating current (AC) comprising the phases A', B' and C'. A rotor-switching-device 64 is connected to a rotor-control-unit 66. The rotor-control-unit 66 is connected to a rotor-supply 69.

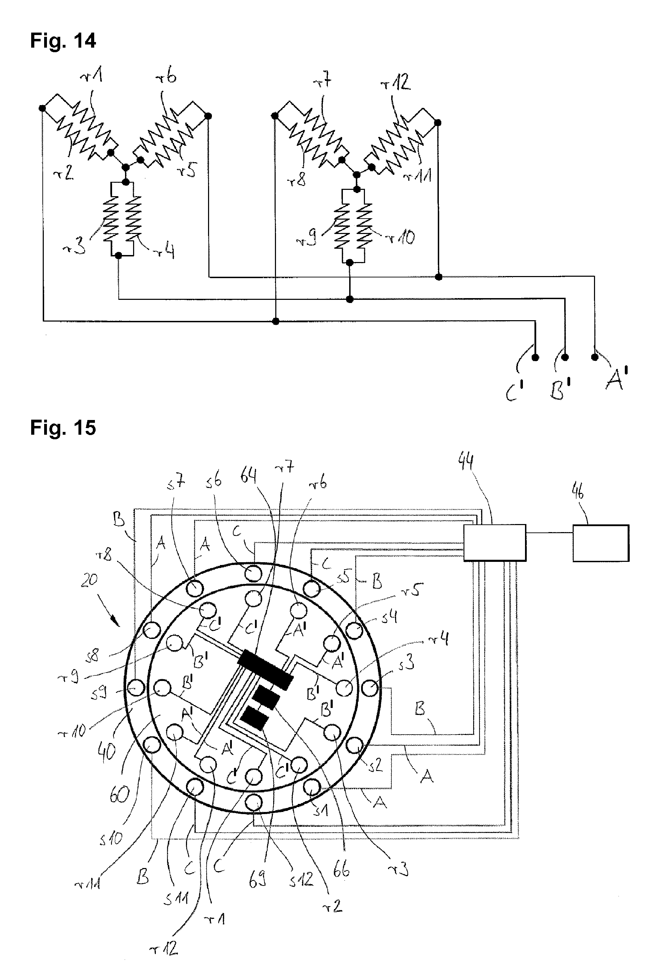

**Fig. 14** shows schematically a preferred rotor-coil configuration of the preferred embodiment of a rotor set up according to Fig. 13. Rotor-coils r1 and r2, respectively, r3 and r4, respectively, r5 and r6, that are all arranged in parallel, are connected in star configuration. The same applies to rotor-coils r7, r8, r9, r10, r11 and r12. The rotor-coils r1 ... r12 are connected to three-phase AC comprising the phases A', B' and C'.

**Fig. 15** shows a further preferred operation mode of an electric machine 20 comprising the rotor and stator set ups according to Figs. 11-14. The pole pitch is twice as much as in the operation mode shown in Fig. 10, thus, 1/6 (60°) of the AC period results in 60° rotation of the rotor 60.

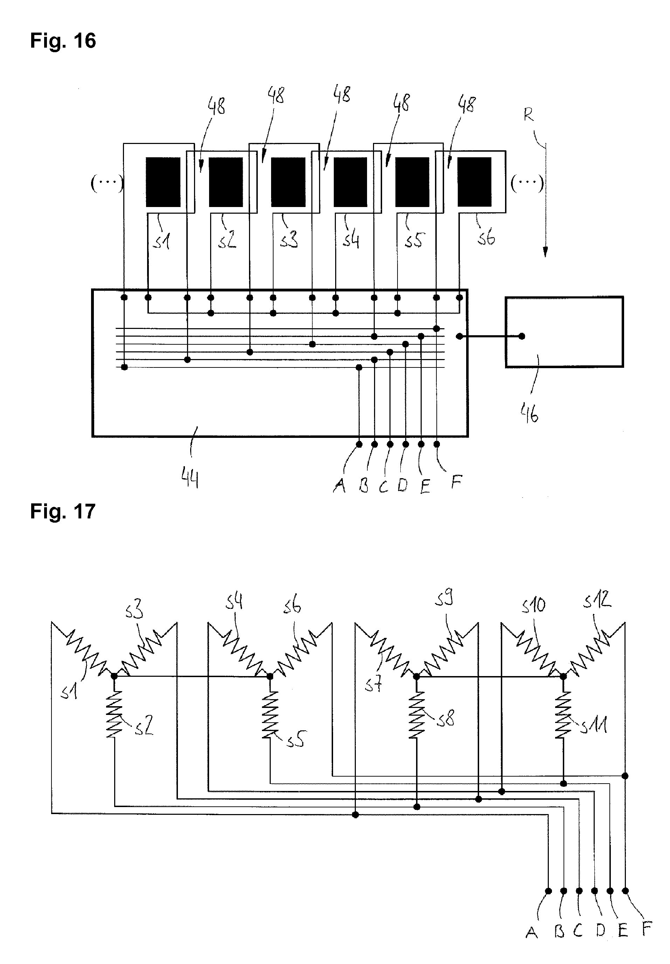

**Fig. 16** shows schematically a further preferred embodiment of a stator set up with a 6-phase winding comprising the phases A, B, C, D, E and F. The remaining configuration is similar to the embodiment shown in Fig. 2a. The stator-coils s1, s2 ... are divided into groups and each group is connected to a phase. Each group forms a star configuration (cf. also to Fig. 17).

**Fig. 17** shows schematically a preferred stator-coil configuration of the preferred embodiment of a rotor set up according to Fig. 16. Stator-coils s1, s2 and s3 and stator-coils s4, s5 and s6, that are connected in star configuration in each case, are connected among themselves and with phases A, B, C, D, E and F of a polyphase system. The same applies to stator-coils s7, s8, s9, s10, s11 and s12.

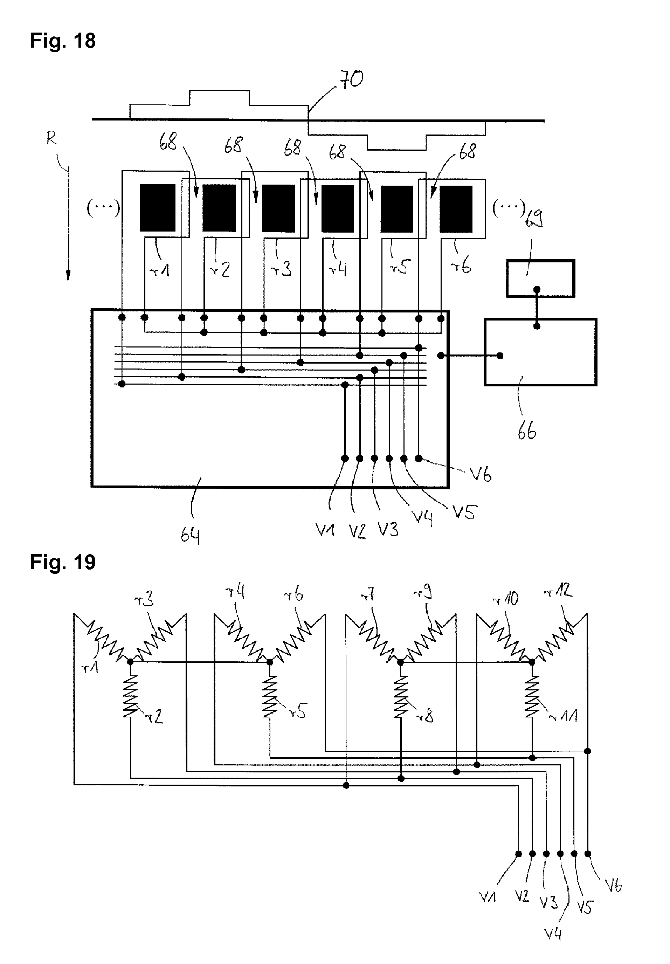

**Fig. 18** shows schematically a further preferred embodiment of a rotor set up. Rotor-coils r1, r2 ... are supplied with DC voltages V1, V2, V3, V4, V5 and V6. These values are as if 6 AC phases have stopped at 30° of a phase A'. There are two pole pairs, thus, one cycle of the 6 phase AC would result in a 180°-rotor rotation. The DC voltages are for example:

$$V_1 = \sin(30°)V = 1/2V$$

$$V_2 = \sin(30°+60°)V = V$$

$$V_3 = \sin(30°+120°)V = 1/2V$$

$$V_4 = \sin(30°+180°)V = -1/2V$$

$$V_5 = \sin(30°+210°)V = -V$$

$$V_6 = \sin(30°+300°)V = -1/2V$$

Two pole pairs are provided. Thus, one cycle of the 6-phase AC results in a 180°-rotor rotation. In addition, a rotor magnetic field intensity 70 is shown in Fig. 18.

**Fig. 19** shows schematically a preferred rotor-coil configuration of the preferred embodiment of a rotor set up according to Fig. 18. Rotor-coils r1, r2 and r3 and rotor-coils r4, r5 and r6, that are connected in star configuration in each case, are connected among themselves and supplied with voltages V1, V2, V3, V4, V5 and V6. The same applies to rotor-coils r7, r8, r9, r10, r11 and r12.

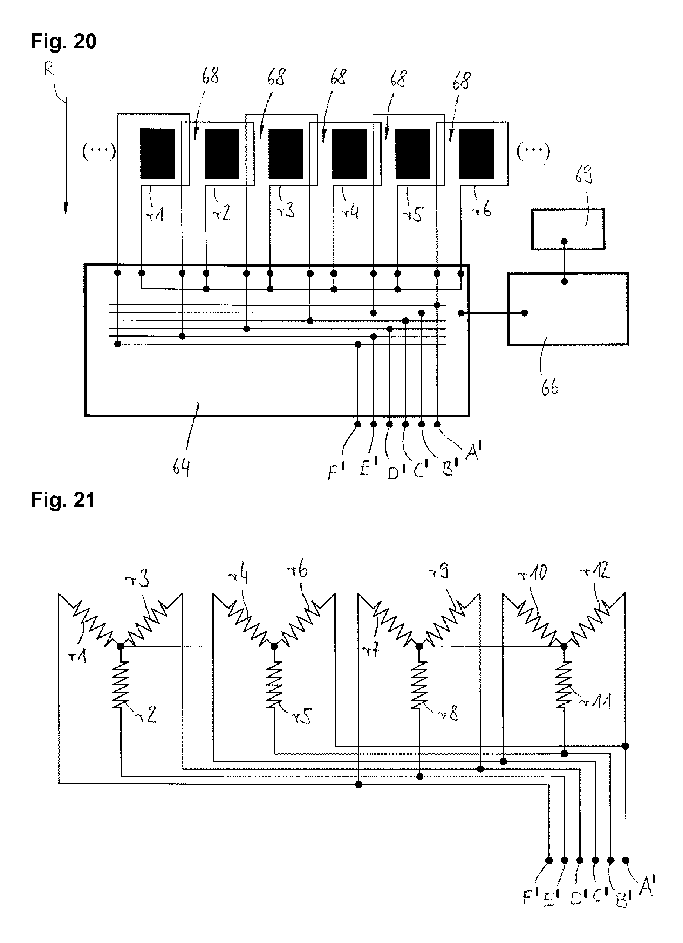

**Fig. 20** shows schematically a further preferred embodiment of a rotor set up with a 6-phase winding comprising the phases F', E', D', C', B' and A'. Contrary to the embodiment according to Fig. 18, the rotor 60 is also supplied with AC. The embodiment according to Fig. 20 enables "double magnetic field rotation". The rotor 60 is supplied with 6 phases. Thus, one cycle of the 6 phase AC results in 360°-rotor rotation.

**Fig. 21** shows schematically a preferred stator-coil configuration of the preferred embodiment of a rotor set up according to Fig. 20.

Reference numerals

| | |
|---|---|
| 20 | electric machine |
| 40 | stator |
| 44 | stator-switching-device |
| 46 | stator-control-unit |
| 48 | stator-slot |
| 49 | stator-supply |
| 50 | communication connection |
| 60 | rotor |
| 66 | rotor-control-unit |
| 64 | rotor-switching device |
| 68 | rotor-slot |
| 69 | rotor-supply |
| 70 | rotor magnetic field intensity |
| 84, 84' | power source |
| 85, 86 | charts |
| AC | alternating current |
| DC | direct current |
| A, B, C | phases (stator) |
| A', B', C' | phases (rotor) |
| V1, V2, V3 | voltages |
| R | rotation axis |
| s1, s2, s3 | stator coils |
| r1, r2, r3 | rotor coils |
| t1, t2 | time steps |

**Claims**

1.  Electric machine (20),
    comprising a stator (40) and a rotor (60),
    wherein the stator (40) comprises at least one stator-pole-pair, and

wherein the rotor (60) comprises at least one rotor-pole-pair,

wherein each pole-pair is formed by at least three coils,

wherein the stator (40) comprises stator-coils (s1; s2; s3 ...), and

wherein the rotor (60) comprises rotor-coils (r1; r2; r3 ...),

wherein the stator (40) comprises a stator-switching-device (44),

wherein the rotor (60) comprises a rotor-switching-device (64),

wherein the stator-switching-device (44) is adapted to electrically connect stator-coils (s1; s2; s3 ...), and

wherein the rotor-switching-device (65) is adapted to electrically connect rotor-coils (r1; r2; r3 ...).

2. Electric machine (20) according to claim 1,
   wherein the stator (40) comprises a plurality of stator-slots (48), and
   wherein the rotor (60) comprises a plurality of rotor-slots (68),
   wherein each stator-coil (s1; s2; s3; ...) is arranged in at least two stator-slots, and
   wherein each rotor-coil (r1, r2, r3; ...) is arranged in at least two rotor-slots (68).

3. Electric machine (20) according to claim 1 or 2,
   wherein a number of stator-slots (48) and a number of rotor-slots (68) is twelve, and
   wherein a number of stator-coils (s1; s2; s3; ...) and a number of rotor-slots (r1; r2; r3; ...) is twelve.

4. Electric machine (20) according to any of the preceding claims,
   wherein the electric machine (20) can be operated with DC and/or AC,
   wherein AC comprises at least three phases (A; B; C ...; A', B', C' ...).

5. Electric machine (20) according to any of the preceding claims,
   wherein the electric machine (20) can be switched from a induction operation mode to a synchronous operation mode and vice versa.

6. Electric machine (20) according to any of the preceding claims,
   wherein the stator-switching-device (44) is adapted to provide the stator (40) with AC, and
   wherein the rotor-switching-device (64) is adapted to provide the rotor (60) with AC.

7. Electric machine (20) according to any of claims 4-6.
   wherein the stator-switching-device (44) and the rotor-switching-device (64) are adapted to vary the number of the phases (A; B; C ...; A', B', C' ...).

8. Electric machine (20) according to any of the preceding claims,
   wherein the rotor-switching-device (64) comprises a rotor-supply (69) that is adapted to provide an electric connection to an external AC or DC power source (84, 84').

9. Electric machine (20) according to claim 8,
   wherein the rotor-supply (69) comprises rotor brushes and/or a flexible wire connection and/or means for electric induction inside the rotor (60) from an external magnetic field.

10. Electric machine (20) according to any of the preceding claims,
    wherein the stator-switching-device (44) is adapted to connect at least three stator-coils (s1; s2; s3; ...) in star configuration, and
    wherein the rotor-switching-device (64) is adapted to connect at least three rotor-coils (r1, r2, r3; ...) in star configuration.

11. Electric machine (20) according to any of the preceding claims,
    wherein the stator-switching-device (44) is controlled by a stator-control-unit (46), and
    wherein the rotor-switching-device (64) is controlled by a rotor-control-unit (66),
    wherein the stator-control-unit (46) and the rotor-control-unit (66) are connected by a communication connection (50).

12. Electric machine (20) according to any of the preceding claims,
    wherein the stator-switching-device (44) and the rotor-switching-device (64) are adapted to supply the stator-coils (s1; s2; s3; ...), respectively, the rotor-coils (r1; r2; r3; ...) with a predefined voltage.

13. Method to operate an electric machine (20),
    wherein the electric machine (20) comprises a stator (40) with a plurality of stator-coils (s1; s2; s3; ...) and a rotor (60) with a plurality of rotor-coils (r1; r2; r3; ... ),
    wherein the stator (40) comprises a stator-switching-device (44), and wherein the rotor (60) comprises a rotor-switching-device (64), comprising the step:

    - changing a rotor-speed of the electric machine (20) by changing a pole number of the electric machine (20) using the rotor-switching-device (64) and/or the stator-switching-device (44).

14. Method to operate an electric machine (20),
    wherein the electric machine (20) comprises a stator (40) with a plurality of stator-coils (s1; s2; s3; ...) and a rotor (60) with a plurality of rotor-coils (r1; r2; r3; ... ),

wherein the stator (40) comprises a stator-switching-device (44), and

wherein the rotor (60) comprises a rotor-switching-device (64), comprising the step:

- providing the stator (40) with AC using the stator-switching device (44);
- providing the rotor (60) with AC or DC or short-circuiting the rotor (60) using the rotor-switching-device (64).

**15.** Method to operate an electric machine (20) according to claims 13 and 14.


**Amended claims in accordance with Rule 137(2) EPC.**

**1.** Electric machine (20),
comprising a stator (40) and a rotor (60),
wherein the stator (40) comprises at least one stator-pole-pair, and wherein the rotor (60) comprises at least one rotor-pole-pair,
wherein each pole-pair is formed by at least three coils,
wherein the stator (40) comprises stator-coils (s1; s2; s3 ...), and wherein the rotor (60) comprises rotor-coils (r1; r2; r3 ...),
wherein the stator (40) comprises a stator-switching-device (44),
wherein the rotor (60) comprises a rotor-switching-device (64),
wherein the stator-switching-device (44) is adapted to electrically connect stator-coils (s1; s2; s3 ...), and
wherein the rotor-switching-device (65) is adapted to electrically connect rotor-coils (r1; r2; r3 ...),
wherein the stator-switching-device (44) is adapted to vary the number of stator-pole-pairs by electrically connecting appropriate stator coils (s1; s2; s3 ...), and
wherein the rotor-switching device (64) is adapted to vary the number of rotor-pole-pairs by electrically connecting appropriate rotor-coils (r1; r2; r3 ...).

**2.** Electric machine (20) according to claim 1,
wherein the stator (40) comprises a plurality of stator-slots (48), and wherein the rotor (60) comprises a plurality of rotor-slots (68),
wherein each stator-coil (s1; s2; s3; ...) is arranged in at least two stator-slots, and
wherein each rotor-coil (r1, r2, r3; ...) is arranged in at least two rotor-slots (68).

**3.** Electric machine (20) according to claim 1 or 2,
wherein a number of stator-slots (48) and a number of rotor-slots (68) is twelve, and
wherein a number of stator-coils (s1; s2; s3; ...) and a number of rotor-slots (r1; r2; r3; ...) is twelve.

**4.** Electric machine (20) according to any of the preceding claims, wherein the electric machine (20) can be operated with DC and/or AC, wherein AC comprises at least three phases (A; B; C ...; A', B', C' ...).

**5.** Electric machine (20) according to any of the preceding claims,
wherein the electric machine (20) can be switched from a induction operation mode to a synchronous operation mode and vice versa.

**6.** Electric machine (20) according to any of the preceding claims,
wherein the stator-switching-device (44) is adapted to provide the stator (40) with AC, and
wherein the rotor-switching-device (64) is adapted to provide the rotor (60) with AC.

**7.** Electric machine (20) according to any of claims 4-6.
wherein the stator-switching-device (44) and the rotor-switching-device (64) are adapted to vary the number of the phases (A; B; C ...; A', B', C' ...).

**8.** Electric machine (20) according to any of the preceding claims,
wherein the rotor-switching-device (64) comprises a rotor-supply (69) that is adapted to provide an electric connection to an external AC or DC power source (84, 84').

**9.** Electric machine (20) according to claim 8,
wherein the rotor-supply (69) comprises rotor brushes and/or a flexible wire connection and/or means for electric induction inside the rotor (60) from an external magnetic field.

**10.** Electric machine (20) according to any of the preceding claims,
wherein the stator-switching-device (44) is adapted to connect at least three stator-coils (s1; s2; s3; ...) in star configuration, and
wherein the rotor-switching-device (64) is adapted to connect at least three rotor-coils (r1, r2, r3; ...) in star configuration.

**11.** Electric machine (20) according to any of the preceding claims,
wherein the stator-switching-device (44) is controlled by a stator-control-unit (46), and
wherein the rotor-switching-device (64) is controlled by a rotor-control-unit (66),
wherein the stator-control-unit (46) and the rotor-control-unit (66) are connected by a communication connection (50).

**12.** Electric machine (20) according to any of the preceding claims,
wherein the stator-switching-device (44) and the rotor-switching-device (64) are adapted to supply the stator-coils (s1; s2; s3; ...), respectively, the rotor-coils (r1; r2; r3; ...) with a predefined voltage.

13. Method to operate an electric machine (20), wherein the electric machine (20) comprises a stator (40) with a plurality of stator-coils (s1; s2; s3; ...) and a rotor (60) with a plurality of rotor-coils (r1; r2; r3; ...), wherein the stator (40) comprises a stator-switching-device (44), and wherein the rotor (60) comprises a rotor-switching-device (64), wherein the stator-switching-device (44) is adapted to vary the number of stator-pole-pairs by electrically connecting appropriate stator coils (s1; s2; s3 ...), and
wherein the rotor-switching device (64) is adapted to vary the number of rotor-pole-pairs by electrically connecting appropriate rotor-coils (r1, r2, r3 ...)., comprising the step:

- changing a rotor-speed of the electric machine (20) by changing a pole number of the electric machine (20) using the rotor-switching-device (64) and/or the stator-switching-device (44).

14. Method to operate an electric machine (20), wherein the electric machine (20) comprises a stator (40) with a plurality of stator-coils (s1; s2; s3; ...) and a rotor (60) with a plurality of rotor-coils (r1; r2; r3; ...), wherein the stator (40) comprises a stator-switching-device (44), and wherein the rotor (60) comprises a rotor-switching-device (64),
wherein the stator-switching-device (44) is adapted to vary the number of stator-pole-pairs by electrically connecting appropriate stator coils (s1; s2; s3 ...), and
wherein the rotor-switching device (64) is adapted to vary the number of rotor-pole-pairs by electrically connecting appropriate rotor-coils (r1, r2, r3 ...)., comprising the step:

- providing the stator (40) with AC using the stator-switching device (44);
- providing the rotor (60) with AC or DC or short-circuiting the rotor (60) using the rotor-switching-device (64).

15. Method to operate an electric machine (20) according to claims 13 and 14.

**Fig. 1**

**Fig. 2a**

**Fig. 2b**

**Fig. 3**

**Fig. 4**

**Fig. 5**

**Fig. 6**

**Fig. 7**

**Fig. 8**

**Fig. 9**

**Fig. 10**

**Fig. 11**

**Fig. 12**

**Fig. 13**

**Fig. 14**

**Fig. 15**

**Fig. 16**

**Fig. 17**

**Fig. 18**

**Fig. 19**

**Fig. 20**

**Fig. 21**

Europäisches
Patentamt

European
Patent Office

Office européen
des brevets

**EUROPEAN SEARCH REPORT**

Application Number

EP 13 19 4936

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 99/14847 A1 (MILDICE JAMES W [US]; HOLLOPETER JAMES E [US]; WESTERGREN DONALD M [US]) 25 March 1999 (1999-03-25) <br> * figures 1A,2 * <br> * page 8 - page 11 * <br> ----- | 1-4,6-15 | INV. <br> H02K19/12 <br> H02K19/26 <br> H02K19/32 <br> H02K99/00 |
| X | US 4 039 909 A (BAKER RICHARD H) 2 August 1977 (1977-08-02) <br> * figure 1 * <br> * column 2 - column 4 * <br> ----- | 1-15 | |
| X | US 4 982 147 A (LAUW HIAN K [US]) 1 January 1991 (1991-01-01) <br> * figures 1,2 * <br> ----- | 1-4,6-15 | |
| X | US 2 726 361 A (RINGLAND WILLIAM L) 6 December 1955 (1955-12-06) <br> * column 3, line 71 - column 4, line 9 * <br> ----- | 13 | |
| X | BE 372 648 A (SOCIÉTÉ D'ÉLECTRICITÉ ET DE MÉCANIQUE) 12 August 1920 (1920-08-12) <br> * figure 1 * <br> * page 5 * <br> ----- | 13 | TECHNICAL FIELDS SEARCHED (IPC) <br><br> H02K |
| X | CH 227 418 A (HERMES PATENTVERWERTUNGS GMBH [DE]) 15 June 1943 (1943-06-15) <br> * page 1, line 40 - page 2, line 5 * <br> ----- | 13 | |
| X | DE 934 180 C (SIEMENS AG) 13 October 1955 (1955-10-13) <br> * page 1, lines 20-27 * <br> ----- | 13 | |
| X | US 1 770 871 A (ALGER PHILIP L) 15 July 1930 (1930-07-15) <br> * claim 1 * <br> ----- <br> -/-- | 13 | |

The present search report has been drawn up for all claims

| Place of search | Date of completion of the search | Examiner |
|---|---|---|
| The Hague | 28 March 2014 | Le Chenadec, Hervé |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**Europäisches Patentamt**
**European Patent Office**
**Office européen des brevets**

# EUROPEAN SEARCH REPORT

Application Number

EP 13 19 4936

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HANS VÄGELE: "Technik der Polumschaltung fÃ 1/4 r Pumpspeichermaschinen grosser Leistung", BROWN BOVERI MITTEILUNGEN,, vol. 61, no. 7, 1 July 1974 (1974-07-01), pages 327-331, XP001454038, * pages 327-328 * | 13 | |

TECHNICAL FIELDS
SEARCHED (IPC)

The present search report has been drawn up for all claims

| Place of search | Date of completion of the search | Examiner |
|---|---|---|
| The Hague | 28 March 2014 | Le Chenadec, Hervé |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 19 4936

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2014

| Patent document cited in search report | | Publication date | Patent family member(s) | | Publication date |
|---|---|---|---|---|---|
| WO 9914847 | A1 | 25-03-1999 | AU 9229898 A<br>US 6252331 B1<br>WO 9914847 A1 | | 05-04-1999<br>26-06-2001<br>25-03-1999 |
| US 4039909 | A | 02-08-1977 | CA 1067955 A1<br>DE 2604447 A1<br>FR 2300458 A1<br>GB 1541871 A<br>US 4039909 A | | 11-12-1979<br>26-08-1976<br>03-09-1976<br>14-03-1979<br>02-08-1977 |
| US 4982147 | A | 01-01-1991 | NONE | | |
| US 2726361 | A | 06-12-1955 | NONE | | |
| BE 372648 | A | 12-08-1920 | NONE | | |
| CH 227418 | A | 15-06-1943 | CH 121140 A<br>CH 227418 A | | 16-06-1927<br>15-06-1943 |
| DE 934180 | C | 13-10-1955 | NONE | | |
| US 1770871 | A | 15-07-1930 | GB 361369 A<br>US 1770871 A | | 12-11-1931<br>15-07-1930 |

EPO FORM P0459